# EUROPEAN PATENT SPECIFICATION

(11) **EP 4 182 105 B1**
(45) Date of publication and mention of the grant of the patent: **25.10.2023**
(21) Application number: 21739394.1
(22) Date of filing: 07.07.2021
(51) Int. Cl.: B21D 43/00, B21D 43/08, B21D 43/14, B23Q 7/05, B21D 22/20, B65G 13/10

(54) **LOADING DEVICE FOR A MACHINE TOOL, MACHINE TOOL, PRODUCTION DEVICE AND METHOD FOR LOADING**
BESCHICKUNGSVORRICHTUNG FÜR EINE WERKZEUGMASCHINE, WERKZEUGMASCHINE, FERTIGUNGSEINRICHTUNG UND VERFAHREN ZUR BESCHICKUNG
DISPOSITIF D'ALIMENTATION POUR UNE MACHINE-OUTIL, MACHINE-OUTIL, DISPOSITIF DE FABRICATION ET PROCÉDÉ D'ALIMENTATION

(30) Priority: 16.07.2020 EP 20186223
(43) Date of publication of application: 24.05.2023
(73) Proprietor: Bystronic Laser AG, 3362 Niederönz (CH)
(72) Inventor: WOIDASKY, Lars, 99867 Gotha (DE)
(74) Representative: Fink Numrich Patentanwälte PartmbB
(86) International application number: PCT/EP2021/068809
(87) International publication number: WO 2022/013033

(56) References cited:
- EP-A1- 0 125 331
- WO-A1-96/04084
- DE-A1- 3 628 868
- DE-C- 359 585
- US-A- 3 894 730

## Description

Loading device for a machine tool, machine tool, production device and method for loading The invention relates to a loading device for a machine tool, a machine tool, a production device having at least one machine tool and at least one loading device, and a method for loading a machine tool. In particular, the invention relates to a loading device for a machine tool according to claim 1, a machine tool according to claim 11, a production device according to claim 12 and a method for loading according to claim 13.

The automatic or semi-automatic loading of metal sheet machining machines requires a fixed schedule for transferring the workpiece to the machine. The metal sheet must always be transferred to the system at a predetermined point and is typically fed to the machining point in the same way as, for example, for bending.

The machined workpiece is transported away in the same way. In this way, efficient transport within the machine can be achieved, but only for one defined workpiece at a time. Other workpieces have to be reprogrammed accordingly and the machine actually has to be mechanically adapted to them.

Swivel bending machines or panel benders, also known as bending centres, are usually manually or semi-automatically loaded. A manual machine is operated by the operator, similar to a folding machine, and the metal sheet is fed, rotated, turned and held by hand. A semi-automatic machine can handle - i.e. rotate, hold, and feed and remove - the workpiece on its own. To do this, the operator must place the metal sheet at the front stop at an exact point on the machine in a manner specified by the machine control and the mechanics. The metal sheet is then machined and must then be removed from the same position.

Document US 3 894 730 A, on which the preamble of appended claim 1 is based, discloses a punch press to which a workpiece is fed via rollers. A clamp including a jaw is used to hold the workpiece against a back gage and thereby position the workpiece accurately during punching.

Document EP 0 125 331 A1 discloses an apparatus for automatically aligning a sheet metal workpiece to a press brake. The apparatus comprises a plurality of gimbal mounted wheels located to protrude slightly above an alignment table to support the workpiece. Based on scanner signals of electro-optical scanners, the workpiece bend line is moved via the wheels into position in the press brake.

Document EP 0 125 331 A1 discloses an apparatus for automatically aligning a sheet metal workpiece to a press brake. The apparatus comprises a plurality of rotatable gimbal mounted wheels arranged on an alignment table to support the workpiece. The wheels are driven by a drive system. A feed conveyor transports the workpiece to the alignment table.

The object of the invention is to avoid the disadvantages of the prior art and to provide an improved loading device for a machine tool, an improved machine tool, an improved production device and an improved method for loading.

This object is achieved by a component for a loading device for a machine tool according to claim 1, a machine tool according to claim 11, a production device according to claim 12 and a method for loading according to claim 13.

The loading device for a machine tool according to the invention comprises a transfer area configured for transferring and/or supporting a workpiece during machining by the machine tool and at least one transport area configured for transporting a workpiece to the transfer area, wherein the at least one transport area has a plurality of driven rollers for supporting and for translational and rotational movement of one or a plurality of workpieces, and wherein the transfer area has a plurality of driven rollers and at least one positioning element for positioning a workpiece, wherein the at least one positioning element is movable in the direction of a machining area of the machine tool.

The "freely movable" rollers make it possible for the operator to place the workpiece at any accessible location in the transfer area and/or the transport area. Simple and flexible operation from three 3 sides is thereby possible. From this place of placement, the workpiece or metal sheet can be automatically transported for machining or referencing. The supply and provision of the workpieces can thus be optimised. For example, stacked metal sheets around the transfer area or support area can be machined without the operator having to take additional steps or automated feeding can take place at any point.

The driven rollers transport the placed metal sheet to a referencing point in the transfer area or support area, with the at least one positioning element such as one or a plurality of stop fingers. These stops can be freely movable and precisely controllable and can position the metal sheet exactly on the calculated position of the machine control. The metal sheet can then be fixed, for example with a vacuum, friction fit or magnetic force, and can be fed to the machine for machining. Advantageously, the metal sheet is transferred after fixing from the rollers to a controlled axis in order to be fed for machining in the correct position.

If, for example, small metal sheets are only handled in the middle, almost the entire front area of the panel bender remains unused in conventional systems. Due to the driven rollers, all areas can be used, parallel in respect of time, for example, for temporary storage of both finished and unmachined metal sheets and/or for transport to and from the machine. In addition, the finished metal sheet does not have to be removed exactly at the feed position, which makes the system more efficient. In addition, the operator does not have to pay close attention to the correct position, location and referencing of the metal sheet, since this is done via driven rollers, if necessary in cooperation with a control unit. This avoids or reduces wastage.

The removal of machined, that is to say bent, metal sheet can also be carried out efficiently and the metal sheet can be removed from any point in the transfer area or support area after machining. Appropriate storage options can also be created and used around the support area here. The bent part does not have to be transported from the machining machine via the controlled axis with a fixation option (manipulator), but can be done entirely with the rollers, since precise positioning is no longer required. This means that the controlled axis can feed a new metal sheet to the machine while the previously bent sheet is still being removed. The transporting of the metal sheet is not only limited to the metal sheet machining machine; links to other machine categories or storage locations are also possible. Metal sheets can be conveyed from a cutting machine to a metal sheet bending machine and then transported to a repository. The operator would then only monitor the machine, but would no longer have to intervene.

It can be provided that the driven rollers can be rotated over an angular range of 360 degrees in a plane of the transfer area or the transport area. The driven rollers can move a workpiece about an axis perpendicular to the plane at any angle from 0° to 360°. The arrangement of these rollers is designed in such a way that they can rotate and push the workpiece or metal sheet. The direction of rotation or axial direction of these rollers can be set up according to the goods to be transported. In a possible design, three individual rollers, whose axes are each offset by 120°, can rotate and transport metal sheets. Adapted speeds of these rollers can enable metal sheet movements in designated paths or transport routes.

It can be provided that the driven rollers are oriented towards a direction of translation in the direction of the at least one positioning element. Workpieces with lower quality requirements, for example, can be fed directly via the driven rollers. The feed movement to the machine can alternatively be carried out via a controlled machine axis, such as a manipulator in order to be able to achieve the smallest possible tolerance deviations.

It can be provided that a plurality of positioning elements are provided. This allows easy adaptation to different workpieces through selective use of the positioning elements. Sliding elements and/or driven rollers can be arranged between the positioning elements.

It can further be provided that the at least one positioning element is displaceable into a rest position below a plane of the transfer area and can be moved into a working position out of the plane of the transfer area. The at least one positioning element is advantageously configured in the working position for positioning a workpiece. The metal sheet can also be positioned or referenced at other points in the transfer area that are more efficient for the respective workpiece or metal sheet. Smaller metal sheets do not have to be placed at the rearmost point, as they then have to cover a further path to the bending area and the process is thus slowed down. For this purpose, retractable positioning elements such as stops are embedded in the support area, which are moved upwards in accordance with the geometry of the metal sheet and enable the metal sheet to be referenced in the vicinity of the bending area. These stops are systematically distributed near the machine.

It can be provided that the at least one positioning element in the plane of the transfer area can be moved laterally in a first and in at least a second direction arranged perpendicular thereto.

It can be provided that a sensor is provided for detecting the position and/or alignment of a workpiece. The determination of the position of any metal sheet placed thereon can be monitored with sensors, for example with cameras. The accuracy of this monitoring can be increased by an optical pattern applied two-dimensionally to the transfer area or support area. The metal sheet can also be deposited only roughly oriented at a position specified by the control unit. This procedure can be supported optically, for example, by a light display or the like. The metal sheet that has not been placed exactly can then be placed precisely on the fingers using mechanical insertion aids by moving the rollers along a predetermined path.

Workpieces can thus be fed directly via the rollers and monitored with the appropriate sensors (current difference measurement, cameras, ultrasound, laser measurement, etc.). In this case, neither an additional, controlled machine axis such as a manipulator or rotator, nor an exact application of the metal sheet to a stop would be necessary. If a camera is used or if the geometry and position of the metal sheets are monitored in a different way, the machine control can calculate a different or more favourable transport path. Metal sheets can then be temporarily stored, for example, and the bending parts that are currently required are transported in a path around this storage location. In this way, a plurality of parallel transport routes can be implemented for the workpieces, which makes production more flexible.

Furthermore, it can be provided that a measuring unit is provided and configured to record the power consumption of the plurality of driven rollers. Furthermore, the position and geometry of the metal sheet can be determined by comparing the current of the drives of the driven rollers. A higher current is consumed when a metal sheet rests on the roller. A number of other types of sensors are also suitable for this. By observing a plurality of rollers, the size, orientation and weight of the workpiece can be determined. The determination can be combined with a bending or production plan in order to improve the accuracy of the determination.

It can be provided that a common drive unit is provided for a plurality of the driven rollers and that a switchable coupling is provided as a connection to the drive unit for each of the driven rollers. The driven rollers can be operated with all conceivable drives: electromechanical, hydraulic, pneumatic, etc. At least one row, or better yet, each individual roller should be controllable and movable. This can usually be done via a drive for each roller. However, it is also possible to drive rollers together and to equip them with switchable clutches. More efficient operation is then possible, but the rollers can still be controlled individually.

Furthermore, it can be provided that the transfer area and the at least one transport area have a plurality of non-driven rollers in addition to the plurality of driven rollers. The roller drives can have a modular structure and can be displaced in a modular manner according to typical applications. Unused areas of the transfer area can be occupied with non-driven rollers of the same size and, if necessary, also replaced with drives. Frequently used handling areas can be set up with more rollers per area in order to ensure precise transport and to improve the transport options for small workpiece dimensions.

A machine tool according to the invention is configured for machining workpieces using tools and comprises at least one loading device as described above. The same advantages and modifications apply as described above.

The machine tool according to the invention has at least one positioning element which is configured for positioning a workpiece. The driven rollers transport the placed metal sheet to a referencing point in the transfer area or support area, namely the at least one positioning element such as one or a plurality of stop fingers. These stops can be freely movable and precisely controllable and can position the metal sheet exactly on the calculated position of the machine control. The metal sheet can then be fixed, for example with a vacuum, friction fit or magnetic force, and can be fed to the machine for machining.

A production device according to the invention comprises at least one machine tool as described above, at least one loading device as described above and at least one further production unit upstream and/or downstream of the machine tool, wherein a transport area is arranged between the machine tool and the upstream and/or downstream production unit. In most cases, only the loading of a special type of machine and thus of a machining process such as bending is considered. Normally, however, a workpiece is brought to its final shape in a plurality of steps and various production units or types of machines must be meaningfully linked with one another. Thus, it can make sense to efficiently link a cutting machine with a bending machine and a chipping machine, repository, colouration, etc. This linking of the material flow, that is to say the transport of workpieces, between the production units can advantageously be implemented via the transport area or areas with the driven rollers. Connections can be implemented between two or a plurality of production units.

A method according to the invention for loading a machine tool configured for machining workpieces comprises the following steps:
- transporting a workpiece by means of a plurality of driven rollers for supporting and for translational and rotational movement of one or a plurality of workpieces to a transfer area for the machine tool;
- positioning the workpiece by a plurality of driven rollers and at least one positioning element provided in the transfer area, wherein the at least one positioning element is movable in the direction of a machining area of the machine tool;
- transferring and/or supporting the workpiece in the transfer area during machining by the machine tool.

The method enables workpieces to be supplied and removed simultaneously in one system. This simultaneous use saves space and improves the process speed. Metal sheets and/or finished bent parts can be temporarily stored in the transfer area or support area in order to be transported efficiently by the operator or system - finished and temporarily stored parts can, for example, be transported away when temporarily stored blank metal sheets are being fed into the machine. As a result, the operator has no unproductive times.

The typical rotating unit (rotator) of a panel bender can be omitted, since the metal sheet can be rotated by means of the driven rollers using the present invention. For this purpose, exact, direct positioning with the rollers is possible, so that new referencing is not necessarily required after each rotation. The transfer area can also be used to automate a bending machine and thus create a semi-automatic bending machine, for example. The transfer to the machine tool can be implemented by means of a plurality of driven rollers and/or one or a plurality of positioning elements.

A robot can easily be used and set down metal sheets on the machine. It simply replaces the operator. It is completely irrelevant where and in which orientation the metal sheets are placed, as they will be automatically referenced later anyway. Accordingly, the robot does not require any special programming or position monitoring and can be integrated into the system with comparatively simple means.

It is conceivable to equip a plurality of machines with a single support area. For example, two machines opposite one another, such as two panel benders, can then be combined in a kind of tandem operation. In this way, the individual machines could bend a workpiece without having to change tools. A panel bender and a conventional bending machine can also be combined. Bends that are not possible on one machine are then automatically assumed by the other. Furthermore, due to the flexible and independent use of the roller units, one operator can supply both machines with different parts or two operators can operate two machines with one feed.

Otherwise the same advantages and modifications apply as described above.

It can be provided that the workpiece is fed to the machine tool by means of the plurality of driven rollers provided in the transfer area. There is no need for a machine axis. For example, in order to increase the accuracy, in addition to the driven rollers, a machine axis can be provided for feeding the workpieces to the machine tool with precise positioning.

Further preferred embodiments of the invention will become apparent from the remaining features mentioned in the dependent claims.

The various embodiments of the invention mentioned in this application can, unless otherwise stated in individual cases, be advantageously combined with one another.

The invention will be explained below in exemplary embodiments with reference to the accompanying drawings. In the figures:
- Figure 1: shows a perspective view of a loading device having a machine tool;
- Figure 2: shows a detailed representation of the loading device;
- Figure 3: shows a perspective view of a loading device having a manipulator axis;
- Figure 4: shows a perspective view of a loading device with only rollers;
- Figure 5: shows a perspective view of a loading device with delivery and removal;
- Figure 6: shows a perspective view of a production device having a machine tool, a loading device and a further production unit;
- Figure 7: shows a perspective view of a bending device with a feed area and a repository;
- Figure 8: shows a perspective view of a bending device having an expanded feed area;
- Figure 9: shows a perspective view of a bending device having a temporary repository in the feed area;
- Figure 10: shows a perspective view of a bending device having a feed area during a final bending; and
- Figure 11: shows a perspective view of a bending device having a feed area in stationary operation.

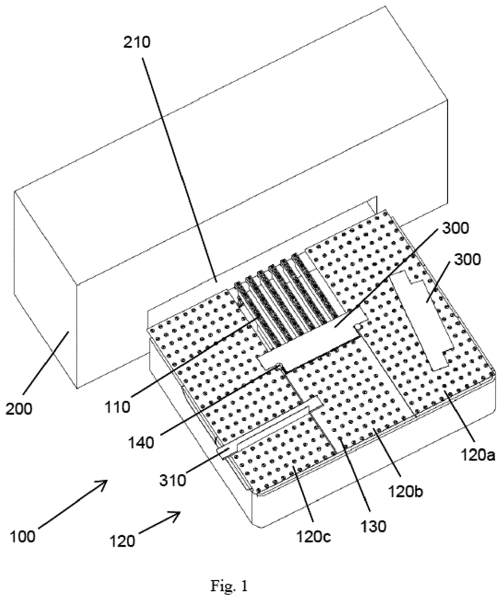

Figure 1 shows a perspective view of a loading device 100 having a machine tool 200. The loading device 100 transports and feeds workpieces such as thin metal sheets 300 to the machine tool 200. Furthermore, the loading device 100 transports workpieces 310 machined by the machine tool 200.

The loading device 100 comprises a transfer area 110 for transferring and/or supporting a workpiece 300 during machining by the machine tool 200 and at least one transport area 120 for transporting a workpiece 300 to the transfer area 110.

The transport area 120 here consists of three individual areas 120a, 120b and 120c. Alternatively, this arrangement can be referred to as three transport areas 120a, 120b and 120c. The workpieces 300 and 310 can be moved across between the transport areas 120.

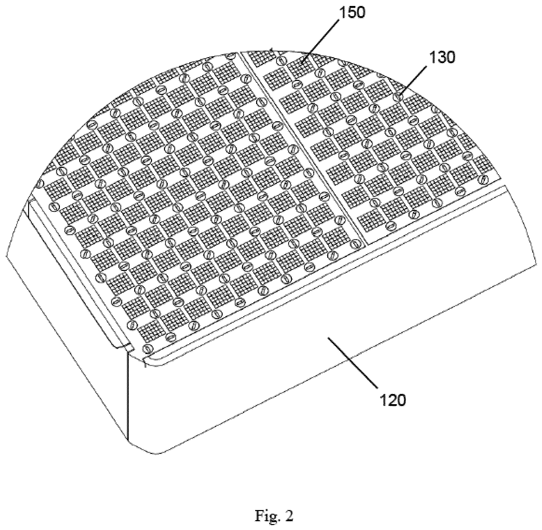

For the transport of the workpieces 300 and 310, the transport area 120 comprises a plurality of driven rollers 130, which are configured for supporting and translational and/or rotational movement of one or a plurality of workpieces 300 and 310. The driven rollers 130 are described in more detail in connection with Figure 2.

The transfer area 110 has a plurality of driven rollers 130 and a positioning element 140. The driven rollers 130 and the positioning element 140 serve to position a workpiece 300 and to feed it in the direction of a machining area 210 of the machine tool 200. The machine tool 200 can be a panel bender or a bending machine. The feeding of the workpiece 300 can also be defined in the direction of an edge region of the transfer area 110, wherein the edge region is configured for connecting to or placing on the machine tool 200.

The positioning element 140 can be lowered into a rest position in a plane of the transfer area 110, so that workpieces 300 and 310 can be moved over the positioning element 140. The positioning element 140 can be moved into a working position out of the plane of the transfer area 110, so that the positioning element 140 is configured in this working position for positioning a workpiece 300 or 310.

The transport area 120 can enclose the transfer area 110 on three sides, as shown. Likewise, the transport area 120 can be arranged on two sides of the transfer area 110. For example, the transfer area 110 can then be designed to be longer so that it is formed. The transfer area 110 can then also simultaneously take on the function of a transfer area 110 in the area of the machine tool 200 and as a transport area in the area away from the machine tool 200.

Possible operators of the machine tool 200 or the loading device 100 can place or remove workpieces 300 and 310 in all areas 120a, 120b and 120c.

Figure 1 shows the loading device 100 with the transport area 120 and the transfer area 110 with three workpieces 300 and 310, which are moved or transported at the same time. In this example, the workpiece 300 is placed in the transport area 120a, then fed to the positioning elements 140 for referencing and applied there with the aid of the feeder of the driven rollers 130. If the positioning is successful, a signal for a control unit of the machine tool 200 or the loading device 100 can be generated.

The metal sheet is then fixed by a manipulator, such as a controlled and precisely positionable axis, fed to the machine tool 200 and bent there. The finished bent workpiece 310 is then transferred by the manipulator, that is to say unfixed and transported by the driven rollers 130, for example, into the transport area 120c. It can be removed from there. An early transfer of the workpiece 300 is ideal here, because then the next workpiece 300 can also be supplied earlier because the manipulator is free again earlier. The processes are very flexible, the metal sheets can be placed or removed anywhere.

The positioning element or elements 140 can form the manipulator. The positioning elements 140 can be moved in a translatory manner in the direction of the machine tool 200 or in a plurality of directions. It is possible to either fix the workpiece 300 independently, for example by means of a vacuum suction device, or the workpiece 300 can be fixed in the machine tool 200 by means of a stop. In addition, the positioning elements 140 are designed to be retractable.

The loading device 100 with the transport area 120 and the transfer area 110 provides a plurality of independent transport paths or tracks by means of the driven rollers 130, so that a plurality of workpieces 300 and 310 can be moved at the same time.

Figure 2 shows a detailed illustration of the transport area 120 with the driven rollers 130. The driven roller 130 can be driven over an angular range of 360 degrees in a plane of the transfer area 110 or the transport area 120. The workpiece 300, which rests on the rollers 130, is moved in this plane and can be rotated by means of the driven roller 130 about an axis running perpendicular to the plane. The driven roller 130 may include a driven ball, for example. Alternatively, for example, three rollers can each have a drive direction offset by 120 degrees, so that these three rollers can interact with each other to move the workpiece 300 in any direction. Then, for example, the rollers can each contain spherical segments such as wheels.

A common drive unit can be provided for a plurality of the driven rollers. A switchable coupling can then be provided as a connection to the drive unit for each of the driven rollers.

The transfer area 110 and the transport area(s) 120 can also include a plurality of non-driven rollers in addition to the plurality of driven rollers 130. This can be advantageous for cost reasons. The rollers or individual areas with rollers can have a modular structure and are then interchangeable. In this way, the system can be converted for different purposes or different workpieces. It is advantageous if two or three driven rollers 130 are arranged under a workpiece. This can be achieved if the density, number and/or distribution of the driven rollers 130 are adapted to the size of the workpieces to be machined or transported.

An optional optical pattern 150 is shown between the rollers 130 to improve the accuracy for camera measurements. A sensor such as a camera can be provided for detecting the position and/or alignment of a workpiece.

Workpieces 300 and 310 can thus be fed directly via the rollers 130 and monitored with appropriate sensors such as current difference measurement, cameras, ultrasound, laser measurement. If a camera is used or if the geometry and position of the metal sheets are monitored in a different way, the machine control can calculate a different or more favourable transport path. Metal sheets can then be temporarily stored, for example, and the bending parts that are currently required are transported in a path around this storage location. In this way, a plurality of parallel transport routes can be implemented for the workpieces, which makes production more flexible.

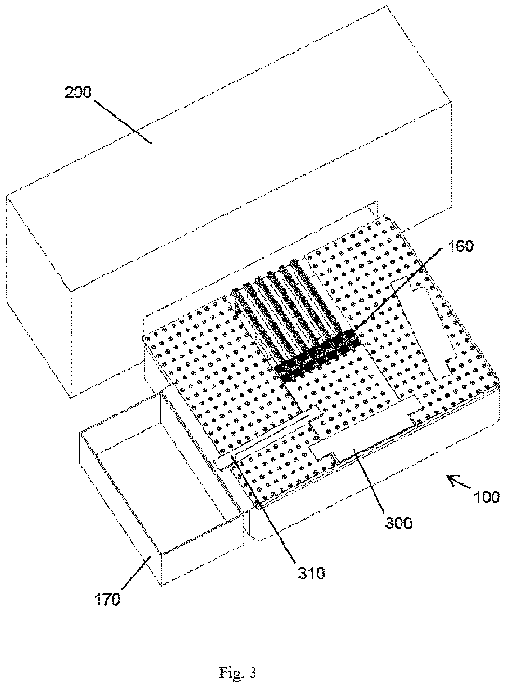

Figure 3 shows a perspective view of a loading device 100 having a plurality of parallel manipulator axes 160 and having an exemplary storage option for finished workpieces 310.

The workpieces 300 are placed on the right, automatically fed for referencing, fixed on the manipulator axes 160 and moved with the same to the machine tool 200. The finished workpieces 310 are brought into a storage box 170 or the like in the left-hand area via a slide. Ideally, the filling of the storage box 170 can be optimised if, for example, the workpieces 310 are only fed to the storage box 170 in the front area. Depending on the volume of the metal sheet and the repository, the storage box 170 is then filled increasingly further back as the filling progresses. The illustration is also only an example; the arrangement of storage box 170 and feeder are flexible.

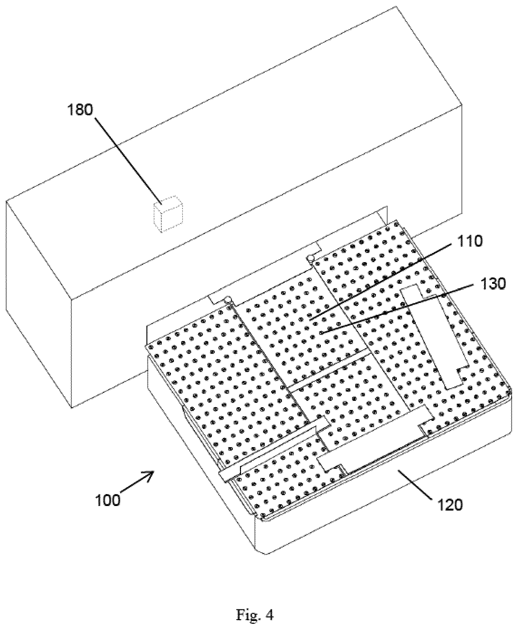

Figure 4 shows a perspective view of a loading device 100 in which the transfer area 110 can only be designed with rollers, that is to say without a referencing unit or manipulator. This possibility allows the stops to be completely eliminated. In this case, the position of the workpiece is determined by the described sensor systems and can be fed to the machining machine without additional referencing. For this purpose, the feed path is adapted to the measured position during the process. A camera is particularly advantageous for the measurement.

According to a further embodiment, the workpiece is only fed via the rollers for machining. The workpiece is then precisely positioned in the machining machine using the stops and handed over for machining. The manipulator axis in the feed area can be omitted accordingly in this embodiment.

The rollers are partially or fully driven rollers 130. The referencing of the workpieces 300 is then taken over by the driven rollers 130. For this purpose, a sensor 180 such as a camera can be provided for detecting the position and/or alignment of a workpiece 300. Alternatively or additionally, a measuring unit can be provided for recording the power consumption of the multiple driven rollers. From an increased power consumption, conclusions can be drawn about the load caused by a workpiece transported by this roller. By observing a plurality of rollers, the size, orientation and weight of the workpiece can be determined. The determination can be combined with a bending or production plan in order to improve the accuracy of the determination.

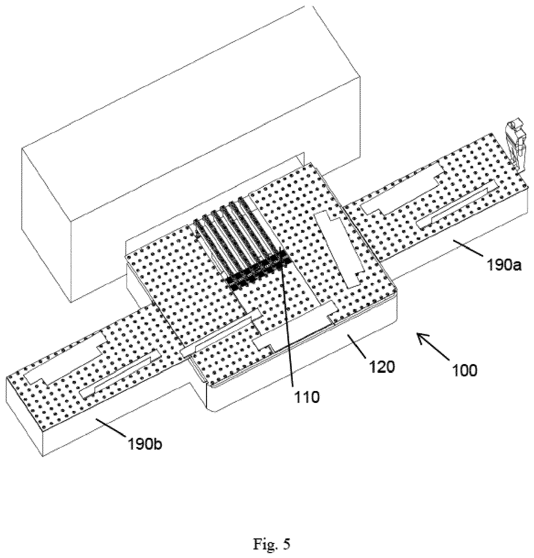

Figure 5 shows a perspective view of a loading device 100 with delivery and removal via modular roller units 190a and 190b.

One or a plurality of operators, as well as other machines or storage systems, can be arranged at the end/start of the two additional roller units 190a and 190b. It is also possible to arrange only one of these roller units 190a and 190b, since the rollers can be driven independently of one another and can thus supply and remove adjacent parts at the same time. The roller units 190a and 190b can be equipped with drivable rollers 130 if necessary.

The transport areas 120 and also the roller units 190a and 190b can provide an area as a temporary repository for workpieces 300 or finished workpieces 310. For example, a stack of metal sheets that has to be machined can be in front of an operator. The operator can work through the production batch one after the other or, for example, place and feed other metal sheet parts next to the first metal sheet stack. The machine control can then calculate a path, keep open the area of the first stack and feed in the other metal sheet. This enables particularly flexible work with the machine, as serial batches, among other things, can easily be interrupted for individual parts or urgent orders.

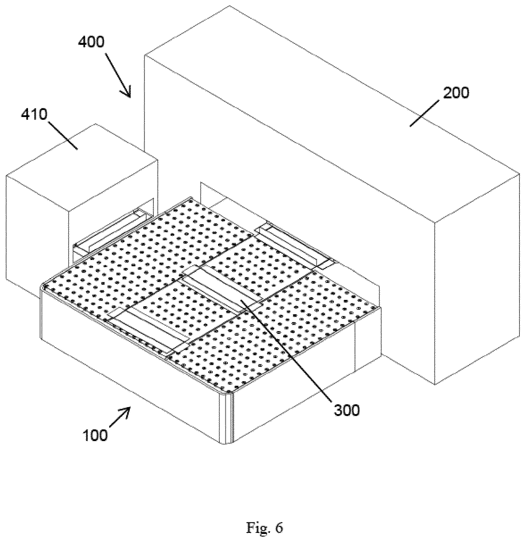

Figure 6 shows a perspective view of a production device 400 having a machine tool 200, a loading device 100 and a further production unit 410 upstream and/or downstream of the machine tool 200. The further production unit could also be a temporary repository for unfinished products or semi-finished products or finished workpieces.

In Figure 6, it can be seen that the loading device 100 can flexibly connect two and a plurality of production units to one another and thus enable an optimised workpiece flow. Another advantage is that a plurality of workpieces 300 can already be present in the feed to machine tool 200, which leads to better utilisation of machine tool 200. With classic machines, there can only be one workpiece in the feeder.

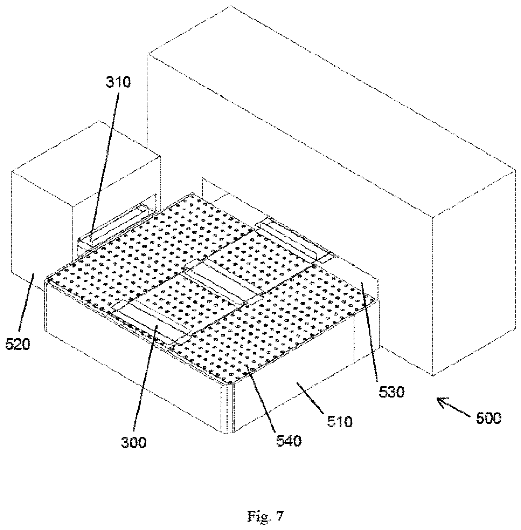

In the following, with reference to Figures 7 to 11, an option is described for optimising the process time, in particular by storing or temporarily storing workpieces - also in different stages or degrees of production.

A panel bender is a highly automated metal sheet bending machine with which a complex bent part can be manufactured without further operator intervention. In particular, the automatic change of the hold-down tools of this type of machine enable this high flexibility and the degree of automation.

The hold-down tools are usually adapted for almost every bend on the part to be formed. At the start of a program, the data is transferred to the machine software, the program is loaded and the hold-down tools are positioned within the machine according to the parameters. The blank metal sheet is placed on top, automatically fed to the bending area and the first leg is bent. Typically, after the first bend, the metal sheet is positioned (rotated) so that the second bend can also be performed with the same tool set. Depending on the complexity of the subsequent bends, the hold-down tools must now be repositioned so as not to collide with the existing legs on the bent part. This tool change is always carried out within the bending process of a part and thus costs a considerable amount of time.

The flexible feed area to the machine presented here enables the metal sheets to be positioned in at least two dimensions at any possible location within the feed area. The feed is mainly used for the transport or handling of the metal sheets and bent parts to and from the machining point. As described, one or a plurality of tool changes within the machining process of a single bent part can often be dispensed with. In this way, downtime can be avoided, in which unfinished products are located in the feed area and not machined.

The basic idea of the invention is to optimise the process time by machining a plurality of metal sheets at the same time wherever possible rather than machining just one metal sheet in the process on the machine: Metal sheets of a batch are collected on or around the feed area and fed to the machining area and bent according to the loaded tool set. The resulting unfinished products are then also collected and temporarily stored. The semi-finished products have a machining status, until a tool change would be necessary.

Temporary storage ideally takes place until there is no more space and further feed is disrupted or until the batch has been completely fed into the system.

The tool set is now changed and adapted by the machine for the final completion of the stored unfinished products. After the change has been made, the unfinished products are fed back to the machine and the machining of the bent parts is ended.

The finished parts can be manually or automatically removed from the system. It is also possible to store the finished parts at the temporary repository locations shown and then remove them together.

The increase in the efficiency of bending part machining is proportional to the number of temporarily stored parts: The more unfinished products that can be temporarily stored, the more tool changes that slow down the process can be omitted.

In addition, metal sheets of other batches can also be stored on or around the feed area if the tool set required for bending can be used within the metal sheets.

If the bending length of the machine and the contour of the bending parts allow, a plurality of metal sheets can be bent at the same time. The unfinished products can be stored in a particularly space-saving manner under the feed area.

Figure 7 shows a perspective view of a bending device 500 with a feed area 510 and a repository 520, for example in the form of a paternoster shelf.

The feed area 510 covers at least the entire width of a machining area 530 of the bending device 500. The feed area 510 comprises a plurality of driven rollers 540, which are configured for supporting and translational and/or rotational movement of one or a plurality of workpieces 300, for example in the form of metal sheets in the unmachined or machined state. The driven rollers 540 correspond to the rollers shown in Figure 2. The explanations regarding the rollers 130 apply accordingly to the rollers 540.

In Figure 7, the feed area 510 is shown with workpieces in the form of blank metal sheets 300 in different machining stages. Blank metal sheets are fed in and all bends are carried out without a change of tools. The resulting unfinished products 310 are fed to the repository 520 and temporarily stored there. The storage process takes place parallel to other bending processes of the same bent parts.

The completion of the batch or the filling level of the repository 520 ends the first process steps and a machine tool change is now required. The unfinished products 310 are then removed from the repository 520 and fed to the bending device 500 for the final bends.

Finished bent parts can be completely removed from the bending device 500 or fed back to the repository 520. The repository 520 could then be transferred to the next machining machine, thus further increasing efficiency.

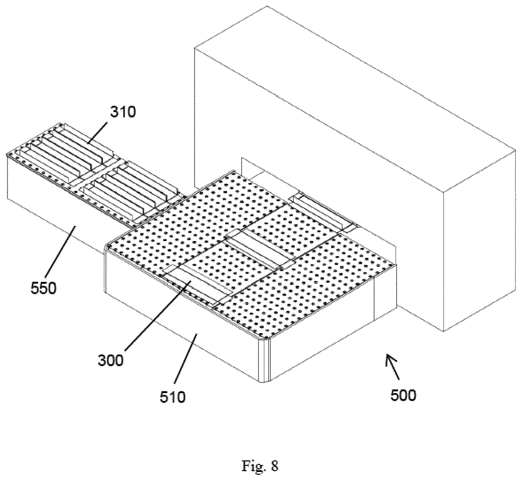

Figure 8 shows a perspective view of the bending device 500 having an extended feed area 550.

The basic configuration of the bending device 500 corresponds to the bending device 500 shown in Figure 7. Here, however, a two-dimensional temporary repository is shown in the form of the extended feed area 550, which is arranged in the plane of the feed area 510.

The extended feed area 550 can represent a modular extension of the feed area 510. The unfinished products 310 are stored in the expanded feed area 550. Unfinished products 310 can also be temporarily stored in the feed area 510.

The unfinished products 310 can be stored dynamically, or by means of further expanded feed areas 550 or a conveyor belt to another storage location. A plurality of extended feed areas 550 can also be provided.

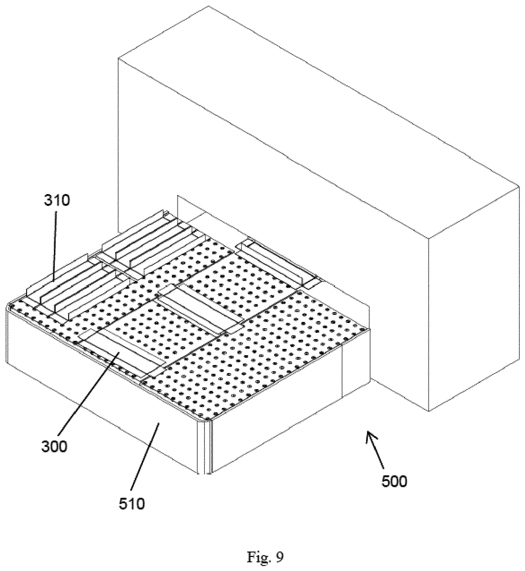

Figure 9 shows a perspective view of a bending device 500 having a temporary repository in the feed area 510.

Here, the feed area 510 forms a temporary repository in an area that is not required directly for feeding workpieces 300 to the bending device 500. This can be used, for example, for small series or when space is limited.

After machining, the unfinished products 310 are transported by means of the driven rollers to the area of the feed area 510 defined as a temporary repository. The definition of the temporary repository can be configured by an operator in the control unit or the control unit can do this automatically based on the number of pieces to be produced and the size of the workpieces 300.

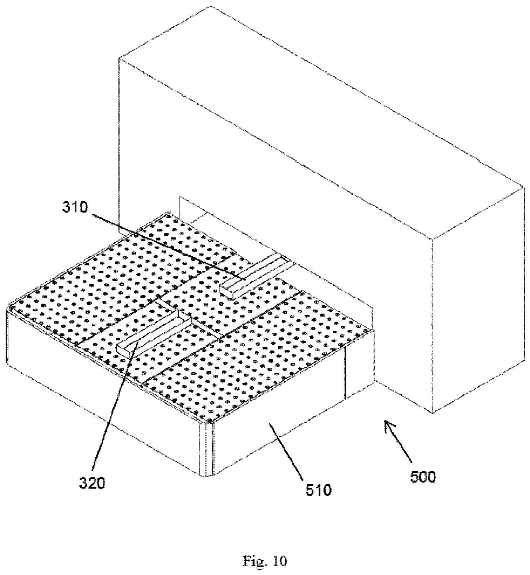

Figure 10 shows a perspective view of a bending device 500 having a feed area 510 during a final bending.

An illustration of the final bend of an unfinished product 310 and the removal of a finished part 320 is shown. As described above, workpieces 300 in different machining states can be moved simultaneously in the feed area 510 and also temporarily stored. This leads to a greatly increased efficiency. Continuous path control for workpieces 300, unfinished products 310 and/or finished parts 320 can occur around temporarily stored parts.

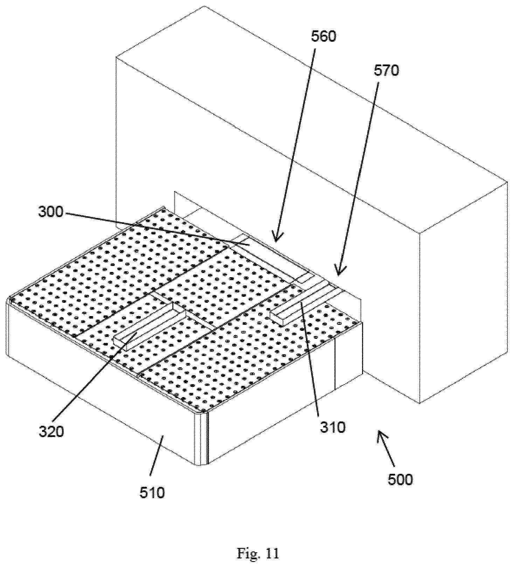

Figure 11 shows a perspective view of a bending device 500 having a feed area 510 during operation of the station. A variant with a possible station operation of the bending device 500 is shown here in the form of a panel bender to increase efficiency.

The tools of the bending device 500 are arranged in stations or tool sections 560, 570 across the width of the bending device 500 in accordance with the bendings of the metal sheet or workpiece 300. At least two tool sections 560, 570 which are arranged on a bending line and are simultaneously accessible are provided.

The feed area 510 with the driven rollers in connection with the first tool section 560 and the second tool section 570 allows a simultaneous, temporally overlapping or temporally directly consecutive machining of different workpieces. The machining of an as yet unmachined workpiece 300 on the first tool section 560 and the machining of an unfinished product 310 on the second tool section 570 are shown by way of example. At the same time, the removal of a finished part 320 is taking place.

A metal sheet can thus be fed to the bending device 500 and bent at two or more different positions. A tool change is therefore superfluous within the bending process, since the blank metal sheets or unfinished products 310 are machined at the assigned and already equipped tool stations. In addition, a combination with temporary storage for suitable bent parts is possible.

The loading device 100 with the transport area 120 and the transfer area 110 provides a plurality of independent transport paths or tracks by means of the driven rollers 130, so that a plurality of workpieces 300 and 310 can be moved at the same time. This increases the flexibility of metal sheet machining.

## Claims

1. A loading device (100) for a machine tool (200), having a transfer area (110) configured for transferring and/or supporting a workpiece (300, 310) during machining by the machine tool (200) and at least one transport area (120, 120a, 120b, 120c) configured for transporting a workpiece (300, 310) to the transfer area (110), wherein the at least one transport area (120) has a plurality of driven rollers (130) for supporting and for translational and rotational movement of one or a plurality of workpieces (300), and
wherein the transfer area (110) has a plurality of driven rollers (130) and is **characterized in that** it has at least one positioning element (140) for positioning a workpiece (300, 310), wherein the at least one positioning element (140) is movable in the direction of a machining area (210) of the machine tool (200).

2. A loading device (100) for a machine tool (200) according to claim 1, **characterised in that** the driven rollers (130) can be rotated over an angular range of 360 degrees in a plane of the transfer area (110) or the transport area (120).

3. The loading device (100) for a machine tool (200) according to one of the preceding claims, **characterised in that** the driven rollers (130) are oriented towards a direction of translation in the direction of the at least one positioning element (140).

4. The loading device (100) for a machine tool (200) according to one of the preceding claims, **characterised in that** a plurality of positioning elements (140) is provided.

5. The loading device (100) for a machine tool (200) according to one of the preceding claims, **characterised in that** the at least one positioning element (140) is displaceable into a rest position below a plane of the transfer area (110) and can be moved into a working position out of the plane of the transfer area (110).

6. The loading device (100) for a machine tool (200) according to one of the preceding claims, **characterised in that** the at least one positioning element (140) in the plane of the transfer area (110) can be moved laterally in a first and in at least a second direction perpendicular thereto.

7. The loading device (100) for a machine tool (200) according to one of the preceding claims, **characterised in that** a sensor (180) is provided for detecting the position and/or alignment of a workpiece (300, 310).

8. The loading device (100) for a machine tool (200) according to one of the preceding claims, **characterised in that** a measuring unit is provided and configured to record the power consumption of the plurality of driven rollers (130).

9. The loading device (100) for a machine tool (200) according to one of the preceding claims, **characterised in that** a common drive unit is provided for a plurality of the driven rollers (130) and that a switchable coupling is provided as a connection to the drive unit for each of the driven rollers (130).

10. The loading device (100) for a machine tool (200) according to one of the preceding claims, **characterised in that** the transfer area (110) and the at least one transport area (120) have a plurality of non-driven rollers in addition to the plurality of driven rollers (130).

11. A machine tool (200) configured for machining workpieces (300, 310) with a loading device (100) according to one of claims 1 to 10.

12. A production device (400) having at least one machine tool (200) according to claim 11, at least one loading device (100) according to one of claims 1 to 10 and at least one further production unit (410) upstream and/or downstream of the machine tool (200), **characterised in that** a transport area (120, 120a, 120c) is arranged respectively between the machine tool (200) and the upstream and/or downstream production unit.

13. A method for loading a machine tool (200) configured for machining workpieces (300, 310), having the following steps
- transporting a workpiece (300, 310) by means of a plurality of driven rollers (130) for supporting and for translational and rotational movement of one or a plurality of workpieces (300) to a transfer area (110) for the machine tool (200);
- positioning the workpiece (300, 310) by a plurality of driven rollers (130) and at least one positioning element (140) provided in the transfer area (110), wherein the at least one positioning element (140) is movable in the direction of a machining area (210) of the machine tool (200);
- transferring and/or supporting the workpiece (300, 310) in the transfer area (110) during machining by the machine tool (200).

14. The method for loading a machine tool (200) according to claim 13, **characterised in that** the workpiece (300) is fed to the machine tool (200) by means of the plurality of driven rollers (130) provided in the transfer area (110).

## Patentansprüche

1. Beschickungsvorrichtung (100) für eine Werkzeugmaschine (200), die einen Übergabebereich (110) aufweist, der zur Übergabe und/oder Unterstützung eines Werkstücks (300, 310) während des Bearbeitens durch die Werkzeugmaschine (200) konfiguriert ist, und mindestens einem Transportbereich (120, 120a, 120b, 120c), der zum Transportieren eines Werkstücks (300, 310) zum Übergabebereich (110) konfiguriert ist, wobei der mindestens eine Transportbereich (120) eine Vielzahl von angetriebenen Rollen (130) zum Unterstützen und translatorischen und rotatorischen Bewegen eines oder mehrerer Werkstücke (300) aufweist, und
wobei der Übergabebereich (110) eine Vielzahl von angetriebenen Rollen (130) aufweist und **dadurch gekennzeichnet ist, dass** er mindestens ein Positionierelement (140) zum Positionieren eines Werkstücks (300, 310) aufweist, wobei das mindestens eine Positionierelement (140) in Richtung eines Bearbeitungsbereichs (210) der Werkzeugmaschine (200) bewegbar ist.

2. Beschickungsvorrichtung (100) für eine Werkzeugmaschine (200) nach Anspruch 1, **dadurch gekennzeichnet, dass** die angetriebenen Rollen (130) über einen Winkelbereich von 360 Grad in einer Ebene des Übergabebereichs (110) oder des Transportbereichs (120) drehbar sind.

3. Beschickungsvorrichtung (100) für eine Werkzeugmaschine (200) nach einem der vorhergehenden Ansprüche, **dadurch gekennzeichnet, dass** die angetriebenen Rollen (130) in einer Translationsrichtung in Richtung des mindestens einen Positionierelements (140) ausgerichtet sind.

4. Beschickungsvorrichtung (100) für eine Werkzeugmaschine (200) nach einem der vorhergehenden Ansprüche, **dadurch gekennzeichnet, dass** eine Vielzahl von Positionierelementen (140) vorgesehen ist.

5. Beschickungsvorrichtung (100) für eine Werkzeugmaschine (200) nach einem der vorhergehenden Ansprüche, **dadurch gekennzeichnet, dass** das mindestens eine Positionierelement (140) in eine Ruheposition unterhalb einer Ebene des Übergabebereichs (110) versetzbar ist, und aus der Ebene des Übergabebereichs (110) in eine Arbeitsposition bewegbar ist.

6. Beschickungsvorrichtung (100) für eine Werkzeugmaschine (200) nach einem der vorhergehenden Ansprüche, **dadurch gekennzeichnet, dass** das mindestens eine Positionierelement (140) in einer ersten Richtung seitlich in der Ebene des Übergabebereichs (110), und in mindestens einer zweiten Richtung senkrecht dazu bewegbar ist.

7. Beschickungsvorrichtung (100) für eine Werkzeugmaschine (200) nach einem der vorhergehenden Ansprüche, **dadurch gekennzeichnet, dass** ein Sensor (180) zum Detektieren der Position und/oder Ausrichtung eines Werkstücks (300, 310) vorgesehen ist.

8. Beschickungsvorrichtung (100) für eine Werkzeugmaschine (200) nach einem der vorhergehenden Ansprüche, **dadurch gekennzeichnet, dass** eine Messeinheit zum Aufzeichnen des Stromverbrauchs der Vielzahl von angetriebenen Rollen (130) vorgesehen und konfiguriert ist.

9. Beschickungsvorrichtung (100) für eine Werkzeugmaschine (200) nach einem der vorhergehenden Ansprüche, **dadurch gekennzeichnet, dass** eine gemeinsame Antriebseinheit für eine Vielzahl der angetriebenen Rollen (130) vorgesehen ist, und dass eine schaltbare Kupplung als Verbindung mit der Antriebseinheit für jede der angetriebenen Rollen (130) vorgesehen ist.

10. Beschickungsvorrichtung (100) für eine Werkzeugmaschine (200) nach einem der vorhergehenden Ansprüche, **dadurch gekennzeichnet, dass** der Übergabebereich (110) und der mindestens eine Transportbereich (120) eine Vielzahl von nicht angetriebenen Rollen zusätzlich zu der Vielzahl von angetriebenen Rollen (130) aufweisen.

11. Werkzeugmaschine (200), die zum Bearbeiten von Werkstücken (300, 310) mit einer Beschickungsvorrichtung (100) nach einem der Ansprüche 1 bis 10 konfiguriert ist.

12. Fertigungseinrichtung (400), die mindestens eine Werkzeugmaschine (200) nach Anspruch 11, mindestens eine Beschickungsvorrichtung (100) nach einem der Ansprüche 1 bis 10 und mindestens eine weitere Fertigungseinheit (410) der Werkzeugmaschine (200) vor- und/oder nachgeordnet aufweist, **dadurch gekennzeichnet, dass** zwischen der Werkzeugmaschine (200) und der vor- und/oder nachgeordneten Fertigungseinheit jeweils ein Transportbereich (120, 120a, 120c) angeordnet ist.

13. Verfahren zur Beschickung einer Werkzeugmaschine (200), die zum Bearbeiten von Werkstücken (300, 310) konfiguriert ist, das die folgenden Schritte aufweist
- Transportieren eines Werkstücks (300, 310) mittels einer Vielzahl von angetriebenen Rollen (130) zum Unterstützen und translatorischen und rotatorischen Bewegen eines oder einer Vielzahl von Werkstücken (300) zu einem Übergabebereich (110) für die Werkzeugmaschine (200);
- Positionieren des Werkstücks (300, 310) durch eine Vielzahl von angetriebenen Rollen (130) und mindestens ein im Übergabebereich (110) vorgesehenes Positionierelement (140), wobei das mindestens eine Positionierelement (140) in Richtung eines Bearbeitungsbereichs (210) der Werkzeugmaschine (200) bewegbar ist,
- Übergeben und/oder Unterstützen des Werkstücks (300, 310) im Übergabebereich (110) während des Bearbeitens durch die Werkzeugmaschine (200).

14. Verfahren zur Beschickung einer Werkzeugmaschine (200) nach Anspruch 13, **dadurch gekennzeichnet, dass** das Werkstück (300) mittels der im Übergabebereich (110) vorgesehenen Vielzahl von angetriebenen Rollen (130) der Werkzeugmaschine (200) zugeführt wird.

## Revendications

1. Dispositif de chargement (100) pour une machine-outil (200), comportant une zone de transfert (110) conçue pour transférer et/ou pour supporter une pièce (300, 310) lors de l'usinage par la machine-outil (200) et au moins une zone de transport (120, 120a, 120b, 120c) conçu pour transporter une pièce (300, 310) vers la zone de transfert (110), dans lequel l'au moins une zone de transport (120) comporte une pluralité de rouleaux (130) entraînés permettant de supporter et de déplacer en translation et en rotation au moins une pièce (300), et
dans lequel la zone de transfert (110) comporte une pluralité de rouleaux (130) entraînés et est **caractérisée en ce qu'**elle comporte au moins un élément de positionnement (140) permettant de positionner une pièce (300, 310), dans lequel l'au moins un élément de positionnement (140) est mobile dans la direction d'une zone d'usinage (210) de la machine-outil (200).

2. Dispositif de chargement (100) pour une machine-outil (200) selon la revendication 1, **caractérisé en ce que** les rouleaux (130) entraînés peuvent tourner sur une plage angulaire de 360 degrés dans un plan de la zone de transfert (110) ou de la zone de transport.

3. Dispositif de chargement (100) pour une machine-outil (200) selon l'une quelconque des revendications précédentes, **caractérisé en ce que** les rouleaux (130) entraînés sont dirigés dans une direction de translation dans la direction de l'au moins un élément de positionnement (140).

4. Dispositif de chargement (100) pour une machine-outil (200) selon l'une quelconque des revendications précédentes, **caractérisé en ce qu'**une pluralité d'éléments de positionnement (140) sont fournis.

5. Dispositif de chargement (100) pour une machine-outil (200) selon l'une quelconque des revendications précédentes, **caractérisé en ce que** l'au moins un élément de positionnement (140) peut être déplacé dans une position de repos sous un plan de la zone de transfert (110) et peut être déplacé dans une position de travail hors du plan de la zone de transfert (110).

6. Dispositif de chargement (100) pour une machine-outil (200) selon l'une quelconque des revendications précédentes, **caractérisé en ce que** l'au moins un élément de positionnement (140) dans le plan de la zone de transfert (110) peut être mobile latéralement dans une première et dans au moins une seconde direction perpendiculaire à celle-ci.

7. Dispositif de chargement (100) pour une machine-outil (200) selon l'une quelconque des revendications précédentes, **caractérisé en ce qu'**un capteur (180) est fourni pour détecter la position et/ou l'alignement de la pièce (300, 310).

8. Dispositif de chargement (100) pour une machine-outil (200) selon l'une quelconque des revendications précédentes, **caractérisé en ce qu'**une unité de mesure est fournie et conçue pour enregistrer la consommation d'énergie de la pluralité de rouleaux (130) entraînés.

9. Dispositif de chargement (100) pour une machine-outil (200) selon l'une quelconque des revendications précédentes, **caractérisé en ce qu'**une unité d'entraînement commune est fournie pour la pluralité de rouleaux (130) entraînés et qu'un couplage commutable est fourni en tant que connexion à l'unité d'entraînement pour chacun des rouleaux (130) entraînés.

10. Dispositif de chargement (100) pour une machine-outil (200) selon l'une quelconque des revendications précédentes, **caractérisé en ce que** la zone de transfert (110) et l'au moins une zone de transport (120) comportent une pluralité de rouleaux non entraînés en plus de la pluralité de rouleaux (130) entraînés.

11. Machine-outil (200) conçue pour usiner des pièces (300, 310) comportant un dispositif de chargement (100) selon l'une quelconque des revendications 1 à 10.

12. Dispositif de production (400) comportant au moins une machine-outil (200) selon la revendication 11, au moins un dispositif de chargement (100) selon l'une quelconque des revendications 1 à 10 et au moins une autre unité de production (410) en amont et/ou en aval de la machine-outil (200), **caractérisé en ce qu'**une zone de transport (120, 120a, 120c) est disposée respectivement entre la machine-outil (200) et l'unité de production en amont et/ou en aval.

13. Procédé de chargement d'une machine-outil (200) conçue pour usiner des pièces (300, 310), comportant les étapes suivantes
- le transport d'une pièce (300, 310) au moyen d'une pluralité de rouleaux (130) entraînés permettant de supporter et de déplacer en translation et en rotation au moins une pièce (300) vers une zone de transfert (110) pour la machine-outil (200) ;
- le positionnement de la pièce (300, 310) par une pluralité de rouleaux (130) entraînés et au moins un élément de positionnement (140) fourni dans la zone de transfert (110), dans lequel l'au moins un élément de positionnement (140) peut être mobile dans la direction d'une zone d'usinage (210) de la machine-outil (200) ;
- le transfert et/ou le support de la pièce (300, 310) dans la zone de transfert (110) lors de l'usinage par la machine-outil (200).

14. Procédé de chargement d'une machine-outil (200) selon la revendication 13, **caractérisé en ce que** la pièce (300) est alimentée à la machine-outil (200) au moyen de la pluralité de rouleaux (130) entraînés fournis dans la zone de transfert (110).
